Europäisches Patentamt

European Patent Office

Office européen des brevets

(11) Publication number: **0 143 758**
**B1**

(12) EUROPEAN PATENT SPECIFICATION

(45) Date of publication of patent specification: **11.01.89**

(51) Int. Cl.⁴: **B 23 B 27/16**

(21) Application number: **84850286.0**

(22) Date of filing: **26.09.84**

(54) Cutting insert.

(30) Priority: **31.10.83 SE 8305969**

(43) Date of publication of application:
**05.06.85 Bulletin 85/23**

(45) Publication of the grant of the patent:
**11.01.89 Bulletin 89/02**

(84) Designated Contracting States:
**DE FR GB IT**

(56) References cited:
**EP-A-0 046 511**
**DE-A-3 105 377**
**GB-A-2 004 480**
**US-A-3 815 192**
**US-A-3 973 308**
**US-A-4 214 845**

(73) Proprietor: **SECO TOOLS AB**
**S-773 01 Fagersta (SE)**

(72) Inventor: **Loqvist, Kaj-Ragnar**
**Regnbagsvägen 40**
**S-773 00 Fagersta (SE)**

(74) Representative: **Eriksson, Kjell et al**
**Sandvik AB Patent Department**
**S-811 81 Sandviken (SE)**

Courier Press, Leamington Spa, England.

## Description

The invention relates to a cutting insert for chipforming machining of preferably metallic workpieces comprising at least one cutting edge formed by the transition between a side surface and an end surface of the insert, wherein the side surface provides a rake face or a contact surface between the insert and the chip formed during the machining, and the end surface provides a clearance surface, and wherein the side surface is provided with a plurality of rows each having alternating raised and depressed portions, said rows extending in the general direction of the cutting edge, and said raised and depressed portions being spaced from the cutting edge, wherein the raised and the depressed portion respectively in one row are laterally spaced from those in an adjacent row, whereby a first depressed portion is located between a first and a second raised portion in a first row nearest to the cutting edge, and a third raised portion is located adjacent to said first depressed portion in direction from the cutting edge.

Cutting inserts of this type are disclosed in US—A—3 973 308 and DE—A—31 05 377. The present invention seeks to improve the surface structure of the rake face of the cutting insert described in the above publications.

One object of the invention is to provide a rake surface having such properties that the "runners" formed on the underneath side of the chip when the chip meets the first row with raised and depressed portions will completely slide on raised portions in the row next behind with alternating raised and depressed portions.

Another object of the invention is to decrease the friction between the chip and the rake face.

The above and other objects are attained by giving the invention the characterizing features stated in claim 1.

The invention is described in detail in the following description with reference to the accompanying drawings in which several embodiments are shown by way of example. It is to be understood that these embodiments are only illustrative of the invention and that various modifications thereof may be made within the scope of the claims.

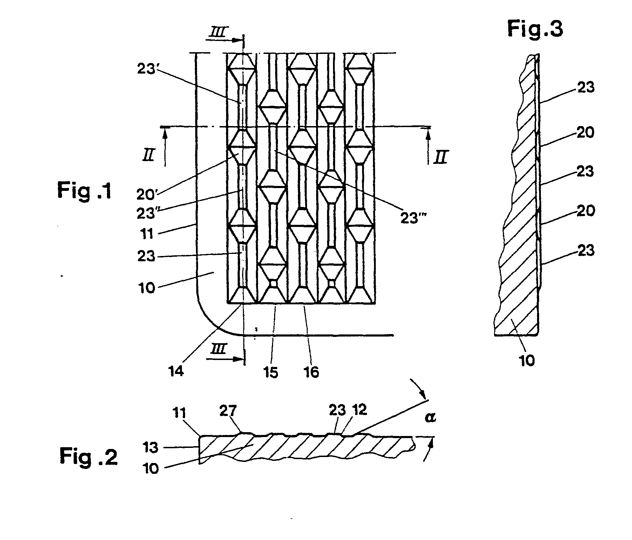

In the drawings, Fig. 1 is a partial top view of the rake face of a cutting insert according to the invention.

Fig. 2 is a section taken on the line II—II in Fig. 1.

Fig. 3 is a section taken on the line III—III in Fig. 1.

Fig. 4 is a partial top view of the rake face of a further embodiment of a cutting insert according to the invention.

Fig. 5 is a section on the line VIII—VIII in Fig. 4.

Fig. 6 is a section on the line IX—IX in Fig. 4.

Fig. 7 illustrates the chip form obtained by a cutting insert according to the invention.

Fig. 8 is a partial top view of the rake face of a still further embodiment of a cutting insert according to the invention.

Fig. 9 is a partial top view of the rake face of still another embodiment of a cutting insert according to the invention.

Corresponding details have been given the same reference numeral in the various figures.

In the figures, the cutting inserts 10 are provided with a cutting edge 11 formed by the transition between a side surface 12 and an end surface 13 on the insert. The side surface 12 then provides the rake face, i.e the contact surface between the insert and the chip formed during the machining, and the end surface 13 provides the clearance surface. The rake face 12 is provided with a plurality of rows 14, 15, 16 having alternating raised and depressed portions. The rows 14, 15, 16 extend generally along the cutting edge 11 and are located inside thereof and spaced therefrom.

In the embodiment according to Figs. 1—3 the raised portions 23 are formed as elongated ridges, which are parallel with the cutting edge 11. The depressed portions 20 are formed by the inerruptions between the ridges 23. The bottom of the portions 20 are generally located in a plane which substantially coincides with the rake face. The cutting edges 11 can either be located in this plane or be located above or below thereof. The rake face 12 can coincide with the remaining portion of the side surface 12 or form an angle thereagainst, for instance in order to provide a chip breaker. Alternatively, the middle portion of the side surface 12 might be depressed relative to the rake face 12.

When the chip 17 formed by the cutting edge 11 meets the row 14 nearest to the cutting edge protrusions 18 are formed on the underneath side of the chip due to the interruptions 20 between the ridges 23. The protrusions act as runners when the chip meets the ridges 23 in the next row 15. Due to the fact that the chip slides on these runners 18 the heat transmission to the insert 10 is highly decreased, which means that the life of the cutting edge is increased. In the embodiment according to Figs. 1—3 the width of one portion $20^1$ between two adjacent ridges $23^1$, $23^{11}$ in the row 14 is smaller than the width of a ridge $23^{111}$ in the row 15. It is to be understood that the width of the portion $20^1$ is defined as the largest width measured at the largest depth of the portion $20^1$ relative to the crests of the ridges 23.

As shown in Fig. 1 the ridges 23 in one row are located half-way between and in front of the portions 20 in an adjacent row. In the illustrated embodiment the distance from the cutting edge 11 to the first row 14 is in the order of 0.25 mm. The distance between two adjacent rows is between 0.1 mm and 0.5 mm. The pitch between the ridges 23 in one row is between 0.3 mm and 1.5 mm, with preference for values between 0.5 mm and 1.0 mm. The height of the ridges 23 is smaller than 0.1 mm, with preference for values between 0.01 mm and 0.04 mm. Ths crests of the ridges 23 are planar so as to provide a flat supporting surface for the chip. The flanks 27 of the ridges 23 facing the cutting edge 11 form inclined surfaces. The inclination angle α of these surfaces relative to a plane parallel with the side surface 12 is smaller than 4°. When the chip 17 moves relative to the insert 10 the cutting fluid therebetween causes an increase in pressure due to the friction; this increase in pressure being dependent on the velocity of the chip, the density of the cutting fluid and the inclination angle α. The length of the inclined surface 27 is chosen with regard to the increase in pressure desired in the gap between chip and insert. A long gap and a small inclination angle result in high pressure if the chip velocity is high due to the long effective frictional surface. If the chip velocity is low, however, the pressure becomes low. A long gap and a large inclination angle result in low pressure if the chip velocity is high, due to the fact that the effective frictional surface is small. Due to the portions 20 it is ensured that pressure fluid is supplied to the rows 15, 16 behind the row 14. The optimized width of the ridges 23, thus, depends on the increase in pressure obtained by the inclined surface 27.

As above-said the pressure of the chip 17 against the insert 10 is decreased when cutting fluid is used due to the arising hydrodynamic force. The decreased pressure and the reduced frictional surface, ie the overall surface of the crests of the ridges 23, means that a considerable amount of the deformation heat remains in the chip and that, thus, the chip requires less chip breaking work, ie smaller cutting forces are required for breaking the chips. Due to the reduced chip breaking work the cutting forces become smaller and due to the reduced frictional surface the insert becomes less heated. Also the wear by diffusion of material between insert and chip is believed to decrease since the hydrodynamic force results in boundary layer lubrication, which means that the metal-to-metal contact surface is decreased.

The invention might of course also be applied in chipforming machining without cutting fluid, where it is possible that the plasma existing close to the chip or the plastic chip itself maintains a pressure increase or maintains the temperature of the chip on such a level that the friction becomes low.

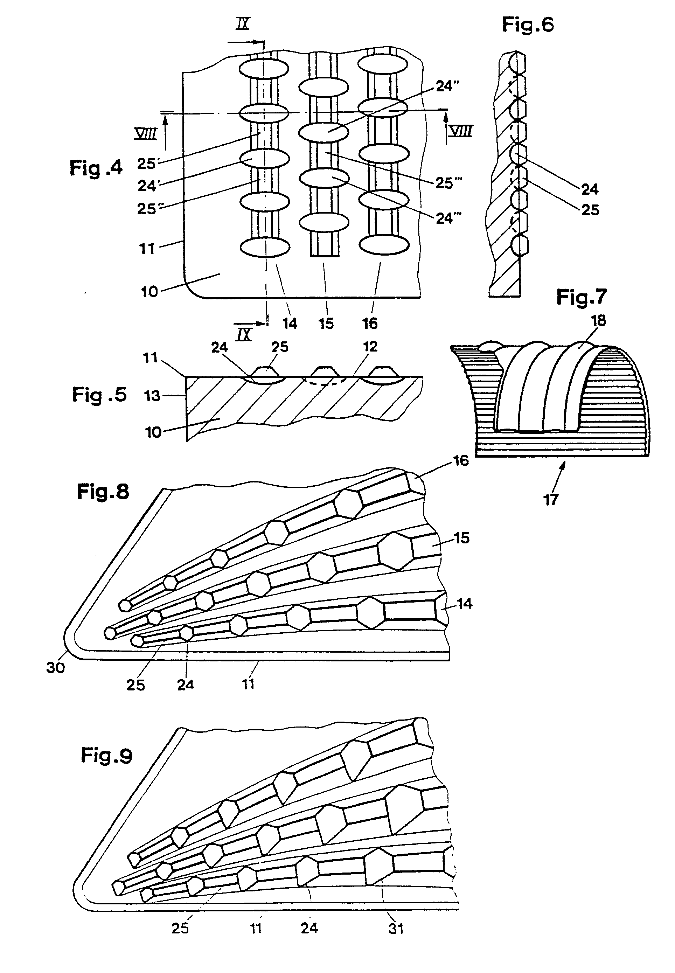

In the embodiment according to Figs. 4—6 the depressed portions are formed by cavities 24 in the rake face 12. The raised portions are formed by ridges 25 corresponding to the ridges 23 in Fig. 1. Advantageously, the cavities 24 and the ridges 25 are shaped similar to the cavities 19 and the ridges 23, respectively.

In all the illustrated embodiments the raised portions in the first row are worn down after certain use of the inserts. This means that the runners 18 of the chip then will be formed by the depressed portions in the second row.

In the embodiments illustrated in Figs. 1—6 all cavities and all ridges in one and the same insert have the same depth and height, respectively, length and width regardless of where they are located on the rake face. Thus, it can be said that inserts having these shapes require low chip breaking work, ie low cutting forces are required for breaking the chips, for comparatively small cutting depths and feeds. Fig. 8 illustrates a shape of the rake face which should result in low chip breaking force also for larger cutting depths and feeds. In similarity with the insert according to Fig. 4 the rake face of the insert according to Fig. 8 is provided with a plurality of rows 14, 15, 16 extending generally along the cutting edge 11 and having ridges 25 and cavities 24. In the embodiment according to Fig. 8 all parameters increase in direction away from the tip radius 30. The size of the cavities 24 increases as to length, depth and width. Also the distance between the cavities increases as well as the height and width of the ridges. Basically, the rate of increase of the parameters should correspond to the increase in cutting depth and feed normally used. By means of a rake face shaped in this way it should be possible to attain a substantially continuous chip breaking function from finishing cut to rough cut with lower cutting forces than normally required. In the illustrated embodiment the rows 14, 15, 16 extend slightly convexly relative to the cutting edge 11. Alternatively, the rows can extend along straight, diverging lines.

The embodiment according to Fig. 9 coincides with that shown in Fig. 8 except for the shape of the front edge surface 31 of the cavities 24. This edge surface is asymmetrical, ie the runners 18 in Fig. 7 have a corresponding asymmetrical shape in a section taken along the cutting edge 11. When the chip meets a ridge 25 in the row next behind the asymmetrical or inclined bottom surface on the runner will cause the chip to tilt more quickly and be broken against the insert. This sidewards tilting can be amplified by making the crests of the ridges 25 inclined relative to the rake face. Also the fact that the ridges 25 are inclined to the cutting edge 11 is believed to contribute to the sidewards tilting.

The above described shapes of the rake face for adaption of the insert to larger cutting depths and feeds can also be applied by modification of the shapes of the rake face shown in Fig. 1 and Fig. 4.

**Claims**

1. Cutting insert for chipforming machining of preferably metallic workpieces comprising at least one cutting edge (11) formed by the transition between a side surface (12) and an end surface (13) of the insert (10), wherein the side surface (12) provides a rake face or a contact surface between the insert and the chip formed during the machining, and the end surface (13) provides a clearance surface, and wherein the side surface (12) is provided with a plurality of rows (14, 15, 16) each having alternating raised (23; 25) and depressed (20; 24) portions, said rows extending in the general direction of the cutting edge, and said raised and depressed portions being spaced from the cutting edge, wherein the raised and the depressed portions, respectively, in one row are laterally spaced from those in an adjacent row, whereby a first depressed portion is located between a first (23¹; 25¹) and a second (23¹¹; 25¹¹) raised portion in a first row (14) nearest to the cutting edge (11), and a third raised portion is located adjacent to said first depressed portion in direction from the cutting edge (11), characterized in that the greatest width of said first depressed portion (20¹; 24¹), measured along a row (20), is smaller than the width, measured along a row, of said third raised portion (23¹¹¹; 25¹¹¹).

2. Cutting insert according to claim 1, wherein the width of all depressed portions (20; 24) is smaller than the width of related raised portions (23; 25) in a row next behind.

3. Cutting insert according to claim 1 or 2, wherein the first (23¹; 25¹) and the second (23¹¹; 25¹¹) raised portions are formed by elongated ridges, and the third raised portion (23¹¹¹, 25¹¹¹) is formed by an elongated ridge located in a second row (15) nearest to the first row (14), and wherein preferably the ridges (23¹, 23¹¹, 23¹¹¹; 25¹, 25¹¹, 25¹¹¹) are parallel with the cutting edge (11).

4. Cutting insert according to claim 3, wherein the crests of the ridges (23¹, 23¹¹, 23¹¹¹; 25¹, 25¹¹, 25¹¹¹) are generally planar in order to provide a supporting surface, and wherein the flanks (27) of the ridges facing the cutting edge (11) form an inclined surface having an inclination angle smaller than 4°.

5. Cutting insert according to claim 3 or 4, wherein the pitch between the ridges (23; 25) is between 0.3 mm and 1.5 mm, preferably between 0.5 mm and 1.0 mm, and wherein the height of the ridges (23; 25) is smaller than 0.1 mm, preferably smaller than 0.04 mm.

6. Cutting insert according to any of the preceding claims, wherein the depressed portions (20) are located substantially in the plane of the rake surface (12).

7. Cutting insert according to claim 1 or 2, wherein the first depressed portion is a cavity (24¹) in the rake face (12), the first (25¹) and second (25¹¹) raised portion are portions projecting above the rake face (12), and wherein the third raised portion (25¹¹¹) is located between a second (24¹¹) and a third (24¹¹¹) cavity in the second row (15).

**Patentansprüche**

1. Schneideinsatz für spanbildendes Bearbeiten, vorzugsweise metallischer Werkstücke, mit mindestens einer Schneidkante (11), welche durch den Übergang zwischen einer Seitenoberfläche (12) und einer Endfläche (13) des Einsatzes (10) gebildet ist, wobei die Seitenfläche (12) eine Spanfläche oder eine Kontaktfläche zwischen dem Einsatz und dem Span vorsieht, der während der Bearbeitung gebildet wird, und die Endfläche (13) eine Freifläche vorsieht und wobei die Seitenfläche (12) mit einer Mehrzahl von Reihen (14, 15, 16) mit jeweils abwechselnd erhabenen (23; 25) und tiefliegenden (20; 24) Teilen versehen ist, wobei sich die Reihen in der allgemeinen Richtung der Schneidkante erstrecken und die erhabenen und tiefliegenden Teile von der Schneidkante im Abstand liegen, die erhabenen bzw. tiefliegenden Teile in einer Reihe seitlich im Abstand von denen einer benachbarten Reihe angeordnet sind, wobei ein erstes tiefliegendes Teil zwischen einem ersten (23¹; 25¹) und einem zweiten (23¹¹; 25¹¹ erhabenen Teil in einer ersten Reihe (14) nächstliegend zur Schneidkante (11) angeordnet ist und eine drittes erhabenes Teil neben dem ersten tiefliegenden Teil in Richtung von der Schneidkante (11) angeordnet ist, dadurch gekennzeichnet, daß die größte Breite des ersten tiefliegenden Teils (20¹; 24¹) längs einer Reihe (20) gemessen, kleiner ist als die Breite des dritten erhabenen Teils (23¹¹¹; 25¹¹¹), längs einer Reihe gemessen.

2. Schneideinsatz nach Anspruch 1, wobei die Breite aller tiefliegenden Teile (20; 24) kleiner ist als die Breite der entsprechenden erhabenen Teile (23; 25) in einer Reihe nächst dahinter.

3. Schneideinsatz nach Anspruch 1 oder 2, wobei die ersten (23¹; 25¹) und die zweiten (23¹¹; 25¹¹) erhabenen Teile durch verlängerte Stege gebildet sind und das dritte erhabene Teil (23¹¹¹; 25¹¹¹) durch einen verlängerten Steg gebildet ist, der in einer zweiten Reihe (15) nächst der ersten Reihe (14) angeordnet ist, und wobei vorzugsweise die Stege (23¹, 23¹¹, 23¹¹¹; 25¹, 25¹¹, 25¹¹¹) parallel zur Schneidkante (11) verlaufen.

4. Schneideinsatz nach Anspruch 3, wobei die Oberteile der Stege (23¹, 23¹¹, 23¹¹¹; 25¹, 25¹¹, 25¹¹¹) im allgemeinen eben sind, um eine Stützoberfläche vorzusehen, und wobei die Flanken (27) der Stege, welche der Schneidkante (11) zugerichtet sind, einer geneigte Oberfläche mit einem Neigungswinkel kleiner als 4° bilden.

5. Schneideinsatz nach Anspruch 3 oder 4, wobei die Steigung zwischen den Stegen (23; 25) zwischen 0,3 mm und 1,5 mm, vorzugsweise zwischen 0,5 mm und 1,0 mm liegt und wobei die Höhe der Stege (23; 25) kleiner als 0,1 mm, vorzugsweise kleiner als 0,04 mm, ist.

6. Schneideinsatz nach einem der vorhergehenden Ansprüche wobei die tiefliegenden Teile (20) im wesentlichen in der Ebene der Spanoberfläche (12) angeordnet sind.

7. Schneideinsatz nach Anspruch 1 oder 2, wobei das erste tiefliegende Teil eine Vertiefung (24¹) in der Spanfläche (12) ist, das erste (25¹) und zweite (25¹¹) erhabene Teil Teile sind, die über die Spanfläche (12) hinausstehen, und wobei das dritte erhabene Teil (25¹¹¹) zwischen einer zweiten (24¹¹) und einer dritten (25¹¹¹) Vertiefung in der zweiten Reihe (15) angeordnet ist.

**Revendications**

1. Insert de coupe pour un usinage avec formation de copeaux de pièces, de préférence métalliques, comprenant au moins une arête de coupe (11) formée par la transition entre une surface latérale (12) et une surface extrême (13) de l'insert (10), insert dans lequel la surface latérale (12)

4

forme une face de dégagement ou une surface de contact entre l'insert et le copeau formé en cours d'usinage, et la surface extrême (13) forme une surface de dépouille, et dans lequel la surface latérale (12) est pourvue d'une pluralité de rangées (14, 15, 16) comportant chacune des parties en saillie (23; 25) et en creux (20; 24) en alternance, lesdites rangées s'étendant dans la direction générale de l'arête de coupe, et lesdites parties en saillie et en creux étant espacées de l'arête de coupe, insert dans lequel les parties respectives en saillie et en creux dans une rangée sont latéralement espacées de celles d'une rangée adjacente de telle sorte qu'une première partie en creux soit placée entre une première (23$^1$; 25$^1$) et une seconde (23$^{11}$; 25$^{11}$) partie en saillie d'une première rangée (14) la plus rapprochée de l'arête de coupe (11), et qu'une troisième partie en saillie soit placée adjacenté à ladite première partie en creux dans une direction partant de l'arête de coupe (11), caractérisé en ce que la largeur maximale de ladite première partie en creux (20$^1$; 25$^1$), mesurée le long d'une rangée (20), est plus petite que la largeur, mesurée le long d'une rangée, de ladite troisième partie en saillie (23$^{111}$; 25$^{111}$).

2. Insert de coupe selon la revendication 1, dans lequel la largeur de toutes les parties en creux (20; 24) est plus petite que la largeur des parties en saillie correspondantes (23; 25) dans une rangée située immédiatement en arrière.

3. Insert de coupe selon la revendication 1 ou 2, dans lequel la première (23$^1$; 25$^1$) et la seconde (23$^{11}$; 25$^{11}$) partie en saillie sont formées par des nervures allongées tandis que la troisième partie en saillie (23$^{111}$; 25$^{111}$) est formée par une nervure allongée placée dans une seconde rangée (15) la plus rapprochée de la première rangée (14), et dans lequel de préférence les nervures (23$^1$, 23$^{11}$, 23$^{111}$; 25$^1$, 25$^{11}$, 25$^{111}$) sont parallèles à l'arête de coupe (11).

4. Insert de coupe selon la revendication 3, dans lequel les crêtes des nervures (23$^1$, 23$^{11}$, 23$^{111}$; 25$^1$, 25$^{11}$, 25$^{111}$) sont gènéralement planes de manière à obtenir une surface portante et dans lequel les flancs (27) des nervures dirigés vers l'arête de coupe (11) forment une surface inclinée ayant un angle d'inclinaison plus petit que 4°.

5. Insert de coupe selon la revendication 3 ou 4, dans lequel le pas entre les nervures (23; 25) est compris entre 0,3 mm et 1,5 mm, de préférence entre 0,5 mm et 1,0 mm, et dans lequel la hauteur des nervures (23; 25) est plus petite que 0,1 mm, de préférence plus petite que 0,04 mm.

6. Insert de coupe selon une quelconque des revendications précédentes, dans lequel les parties en creux (20) sont placées sensiblement dans le plan de la surface de dégagement (12).

7. Insert de coupe selon la revendication 1 ou 2, dans lequel la première partie en creux est une cavité (24$^1$) dans la face de dégagement (12), la première (25$^1$) et la seconde (25$^{11}$) partie en saillie sont des parties faisant saillie au-dessus de la face de dégagement (12), et dans lequel la troisième partie en saillie (25$^{111}$) est placée entre une seconde (24$^{11}$) et une troisième (24$^{111}$) cavité dans la seconde rangée (15).

Fig .1

Fig .2

Fig.3

EP 0 143 758 B1

Fig.4

Fig.5

Fig.6

Fig.7

Fig.8

Fig.9

2